# EUROPEAN PATENT SPECIFICATION

(11) **EP 4 438 261 B1**
(45) Date of publication and mention of the grant of the patent: **23.09.2026**
(21) Application number: 24164979.7
(22) Date of filing: 20.03.2024
(51) Int. Cl.: B29C 44/34, B29C 44/42, A43B 13/04, B29B 17/00, B29D 35/12, B29B 17/04, B29K 105/26, B29K 23/00, B29K 223/00, B29K 231/00, B29K 423/00, B29K 623/00, B29L 31/50

(54) **PLASTIC FOAM PRODUCT ADDED WITH EVA RECYCLED PELLETS AND METHOD OF MANUFACTURING SAME**
KUNSTSTOFFSCHAUMPRODUKT MIT HINZUGEFÜGTEN EVA-RECYCLIERTEN PELLETS UND VERFAHREN ZUR HERSTELLUNG DAVON
PRODUIT EN MOUSSE PLASTIQUE ADDITIONNÉ DE GRANULÉS RECYCLÉS D'EVA ET SON PROCÉDÉ DE FABRICATION

(30) Priority: 29.03.2023 KR 20230041087
(43) Date of publication of application: 02.10.2024
(73) Proprietor: Haksan Co., Ltd., Busan 46757 (KR); Korea Institute of Materials Convergence Technology, Busan 47154 (KR)
(72) Inventor: Kim, Hyo Jun, 47154 Busan (KR); Park, Geon Wook, 47154 Busan (KR); Yu, Jae-Keun, 47154 Busan (KR); Kim, Yongsoo, 50604 Gyeongsangnam-do (KR); Park, Jinoh, 49203 Busan (KR)
(74) Representative: RGTH

(56) References cited:
- KR-B1- 102 185 829
- US-A1- 2010 237 527
- US-A1- 2014 066 530
- BIANCHI IACOPO ET AL: "Mechanical characterization and sustainability assessment of recycled EVA for footwears", THE INTERNATIONAL JOURNAL OF ADVANCED MANUFACTURING TECHNOLOGY, SPRINGER, LONDON, vol. 126, no. 7-8, 29 March 2023 (2023-03-29), pages 3149 - 3160, XP037942730, ISSN: 0268-3768, [retrieved on 20230329], DOI: 10.1007/S00170-023-11332-1
- DATABASE INSPEC [online] THE INSTITUTION OF ELECTRICAL ENGINEERS, STEVENAGE, GB; 2023, BIANCHI I ET AL: "Mechanical characterization and sustainability assessment of recycled EVA for footwears", Database accession no. 23508549

## Description

The present application claims priority to Korean Patent Application No. 10-2023-0041087, filed March 29, 2024.

### BACKGROUND OF THE INVENTION

### Field of the Invention

The present disclosure relates generally to a plastic foam product added with EVA recycled pellets and a method of manufacturing the same. More particularly, the present disclosure relates to a plastic foam product added with EVA recycled pellets and a method of manufacturing the same, in which there is provided a process for manufacturing a shoe sole by recycling shoe molding waste generated due to defective judgment during a shoe manufacturing process and used shoe waste discarded after use of finished shoe products, thereby allowing shoe manufacturing to meet the trend of pursuing eco-friendly products in Korea and in markets such as Europe; and there is provided a process in which dispersion between materials is strengthened in the process of manufacturing a plastic foam product by adding EVA recycled pellets to an EVA foam compound and mixing them with each other, thereby enabling uniform foaming and thus realizing a good shape and improving the strength and quality of the product.

### Description of the Related Art

Synthetic resin has the characteristics of being easy to mold, being light, and being almost unbreakable. Moreover, because it can realize various physical properties by varying its internal composition, it is used as a vital material in various fields, and its usage is increasing. Synthetic resin, or plastic, is used in practically every area of daily life. However, the mass production and use of synthetic resin over the past few decades has led to recent environmental and social problems. Synthetic resin waste that remains undegraded seriously damages nature and disturbs the ecosystem.

Common methods for processing synthetic resin waste include landfilling, incineration, and recycling. However, among these processing methods, the landfilling and incineration methods cause secondary environmental pollution, so the recycling method which has the smallest environmental load is recommended.

Synthetic resin waste also includes those that are discarded without being used. For example, there are products that are completed through a normal manufacturing process, but are discarded without being commercialized due to minor reasons such as scratches or failure to meet specifications.

Meanwhile, there are many different types of recycling devices for recycling the above-described synthetic resin waste. The recycling devices have the basic function of washing and crushing objects to be recycled. When waste synthetic resin is put in, it comes out as a crushed product.

KR 102 185 829 B1 discloses a system for manufacturing midsole sheets using recycled EVA foam. It includes preprocessing (e.g., grinding, washing), blending with new EVA, and molding.

US 2010/237527 A1 D2 discloses adding EVA recycled pellets into foam compounds.

However, the conventional recycling devices have the disadvantage that the quality of the crushed product discharged from the device is significantly reduced. That is, even when high-quality waste synthetic resin is put in, it is transformed into a product having a lower quality than the original material. For example, when a transparent synthetic resin container that has never been used but is judged defective due to fine scratches is put in, the transparency of the resulting crushed product is significantly lower than that of the original synthetic resin container.

Accordingly, there is a need to develop technology to minimize quality degradation when recycling synthetic resin. To this end, research is underway to find the optimal size of a crushed synthetic resin product by implementing various sizes of the crushed synthetic resin product.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent No. 10-0537459 "Crushing mixing device for recycling and injection molding of thermosetting resins"
(Patent document 2) Korean Patent No. 10-1999769 "Apparatus for recycling faulty synthetic resin finished product"
(Patent document 3) Korean Patent No. 10-2216757 "Grinder with apparatus for removing dust"

### SUMMARY OF THE INVENTION

Accordingly, the present disclosure has been made keeping in mind the above problems occurring in the related art, and an objective of the present disclosure is to provide a novel plastic foam product added with EVA recycled pellets and a method of manufacturing the same, in which there is provided a process for manufacturing a shoe sole by recycling shoe molding waste or used shoe waste through an EVA recycled pellet forming step, an EVA foam compound preparing step, a recycled pellet added foam compound forming step, an EVA foam compound/recycled pellet primary mixing/dispersing step, an EVA foam compound/recycled pellet secondary mixing/dispersing step, and a plastic foam product manufacturing step, thereby allowing shoe manufacturing to meet the trend of pursuing eco-friendly products in Korea and in markets such as Europe.

Another objective of the present disclosure is to provide a novel plastic foam product added with EVA recycled pellets and a method of manufacturing the same, in which there is provided a process in which dispersion between materials is strengthened in the process of manufacturing a plastic foam product by adding EVA recycled pellets to an EVA foam compound and mixing them with each other, thereby enabling uniform foaming and thus realizing a good shape and improving the strength and quality of the product.

In order to achieve the above objectives, according to the present invention, there is provided a method of manufacturing a plastic foam product added with EVA recycled pellets, the method including: forming EVA recycled pellets by crushing EVA foam waste by a crushing device; preparing an EVA foam compound from an EVA raw material; adding the EVA recycled pellets to the EVA foam compound; primarily mixing and dispersing the EVA foam compound and the EVA recycled pellets in a high viscosity state at a set rotation speed by a kneader under a set processing temperature condition; secondarily mixing and dispersing the primarily mixed and dispersed EVA foam compound and EVA recycled pellets while inputting the primarily mixed and dispersed EVA foam compound and EVA recycled pellets into a roll mill; and forming a final plastic foam product by injecting the mixed and dispersed EVA foam compound and EVA recycled pellets in a molten state into a foam mold to form a semi-finished plastic foam product and then inputting the semi-finished plastic foam product into a press mold and press-molding the semi-finished plastic foam product.

The final plastic foam product may be a shoe sole, and the EVA foam waste may include shoe molding waste generated in a shoe manufacturing process and used shoe waste discarded after use of finished shoe products.

The method may further include: after the forming of the final plastic foam product, collecting a defective product while inspecting plastic foam products; and inputting the collected defective product into the crushing device by using the collected defective product as the EVA foam waste.

According to the present invention, the forming of the EVA recycled pellets is performed by forming EVA recycled pellets having a diameter of 3 to 6 mm by the crushing device, the adding of the EVA recycled pellets to the EVA foam compound may be performed by adding 15 to 25 wt% of the EVA recycled pellets to 75 to 85 wt% of the EVA foam compound, and the primarily mixing and dispersing of the EVA foam compound and the EVA recycled pellets and the secondarily mixing and dispersing of the EVA foam compound and the EVA recycled pellets may be performed by mixing and dispersing the EVA foam compound and the EVA recycled pellets under a processing temperature condition of 85°C to 95°C.

The method may further include: after the adding of the EVA recycled pellets to the EVA foam compound and before the primarily mixing and dispersing of the EVA foam compound and the EVA recycled pellets, adding additives for improving compatibility, improving dispersibility of recycled scraps, and uniformizing physical properties to a mixture of the EVA foam compound and the EVA recycled pellets.

According to another aspect of the present disclosure, there is provided a plastic foam product added with EVA recycled pellets, the plastic foam product being manufactured by the method.

According to the plastic foam product added with the EVA recycled pellets and the method of manufacturing the same according to the present disclosure, it is possible to meet the trend of pursuing eco-friendly products in Korea and in markets such as Europe. Also, as a process in which dispersion between materials is strengthened in the process of manufacturing the plastic foam product by adding the EVA recycled pellets to the EVA foam compound and mixing them with each other is provided, it is possible to enable uniform foaming, thereby realizing a good shape and improving the strength and quality of the product.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a basic flow block diagram illustrating a method of manufacturing a plastic foam product added with EVA recycled pellets according to the present disclosure;
FIG. 2 is a flow block diagram illustrating a method of manufacturing a plastic foam product added with EVA recycled pellets according to an embodiment of the present disclosure;

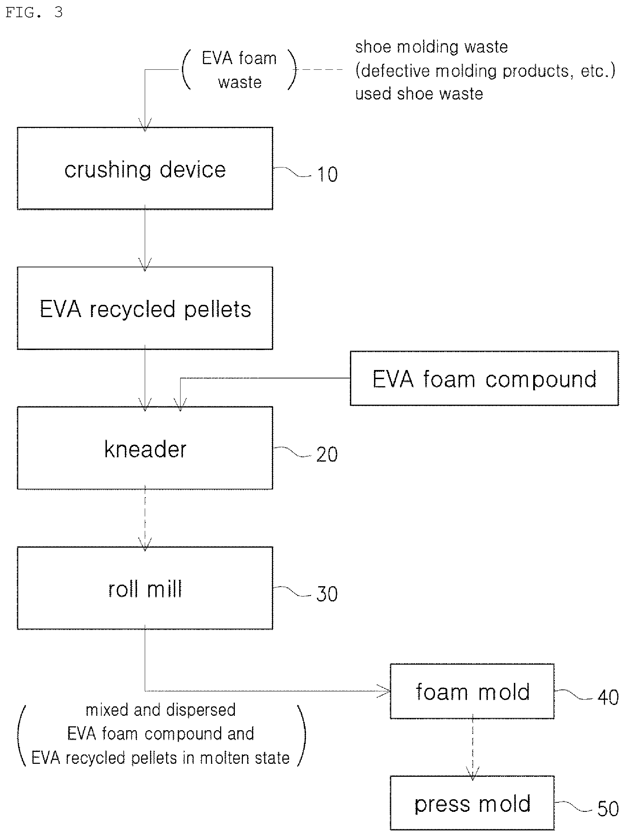

FIG. 3 is a view illustrating the method of manufacturing the plastic foam product added with the EVA recycled pellets according to the embodiment of the present disclosure;
FIG. 4 is a view illustrating a shoe sole that is a plastic foam product added with EVA recycled pellets according to the present disclosure; and
FIG. 5 is a view illustrating the configuration of a crushing device at a defective product crushing device inputting step according to the embodiment of the present disclosure.

### DETAILED DESCRIPTION OF THE INVENTION

Hereinafter, embodiments of the present disclosure will be described in detail with reference to the accompanying drawings. Meanwhile, in the drawings and specification, configurations and operations that can be easily understood by those skilled in the art will be briefly illustrated or omitted. In particular, in the drawings and specification, illustrations and descriptions of technical configurations and operations directly unrelated to the technical features of the present disclosure will be omitted, and only the technical configurations related to the present disclosure will be briefly illustrated or described.

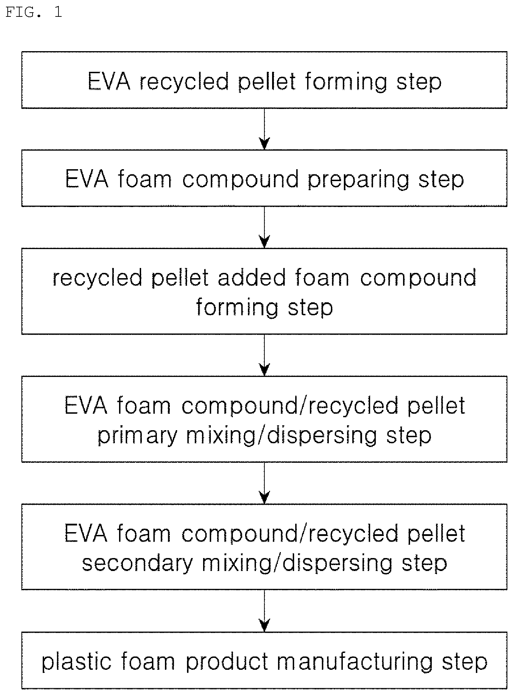

As illustrated in FIG. 1, a method of manufacturing a plastic foam product added with EVA recycled pellets according to an embodiment of the present disclosure includes an EVA recycled pellet forming step, an EVA foam compound preparing step, a recycled pellet added foam compound forming step, an EVA foam compound/recycled pellet primary mixing/dispersing step, an EVA foam compound/recycled pellet secondary mixing/dispersing step, and a plastic foam product manufacturing step.

The EVA recycled pellet forming step is a step in which EVA foam waste is crushed by a crushing device 100 to form EVA recycled pellets. Here, the EVA foam waste may include shoe molding waste generated in a shoe manufacturing process and used shoe waste discarded after use of finished shoe products. In addition, a final plastic foam product manufactured according to the present disclosure may be a shoe sole. In the EVA recycled pellet forming step according to the embodiment of the present disclosure, EVA recycled pellets having a diameter of 3 to 6 mm are formed by the crushing device 100. When the particle size of the EVA recycled pellets is larger than the diameter size of 3 to 6 mm, dispersion may not occur smoothly when mixing an EVA foam compound and the EVA recycled pellets. When the particle size of the EVA recycled pellets is smaller than the diameter size of 3 to 6 mm, the EVA recycled pellets may fly away when mixing the EVA foam compound and the EVA recycled pellets, and mixing may not occur smoothly.

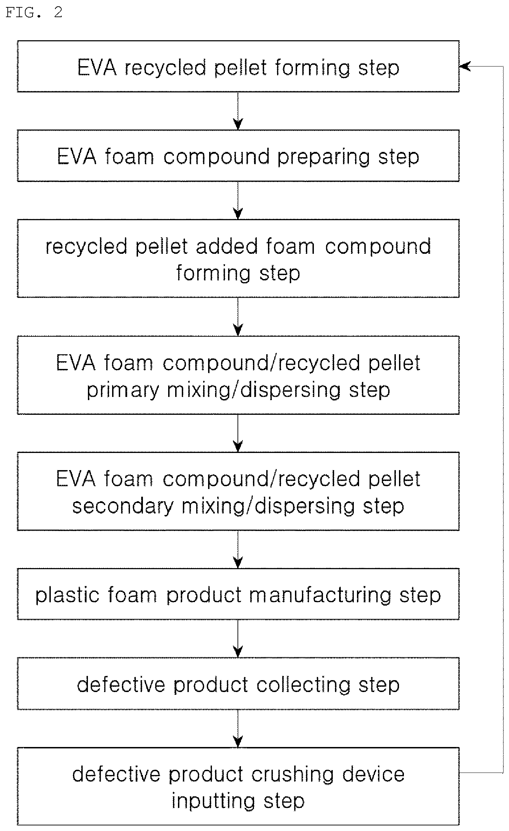

Meanwhile, as illustrated in FIG. 2, the method of manufacturing the plastic foam product added with the EVA recycled pellets according to the embodiment of the present disclosure further includes a defective product collecting step and a defective product crushing device inputting step after the plastic foam product manufacturing step.

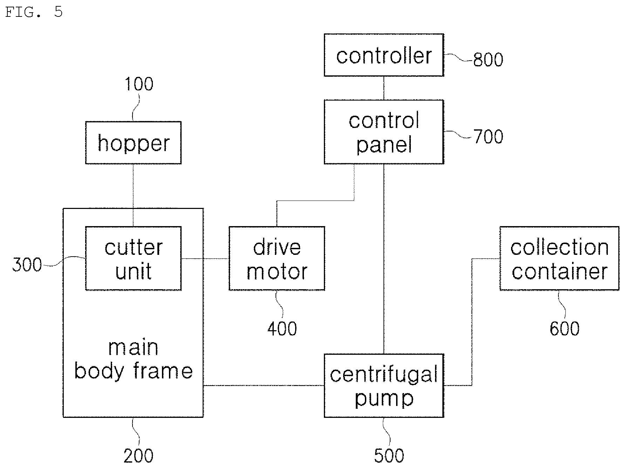

The defective product collecting step is a step in which a defective product is collected while inspecting plastic foam products. The defective product crushing device inputting step is a step in which the collected defective product is input into the crushing device 10 by using collected defective product as the EVA foam waste. Here, as illustrated in FIG. 5, the crushing device 10 according to the embodiment of the present disclosure into which the defective product collected in the defective product crushing device inputting step is input includes a hopper 100, a main body frame 200, a cutter unit 300, a drive motor 400, a centrifugal pump 500, a collection container 600, and a controller 800. The crushing device 10 is a device that is effectively applied to manufacturing pellets for recycling defective soft EVA shoe soles. A crushing device having the configuration disclosed in Korean Patent Application Publication No. 10-2022-0185396, entitled "Crushing Device for Manufacturing EVA Recycled Pellets" filed by the present applicant, may be used in the method of manufacturing the plastic foam product added with the EVA recycled pellets according to the embodiment of the present disclosure.

The EVA foam compound preparing step is a step in which an EVA foam compound is prepared from an EVA raw material. The EVA foam compound is a general foam compound prepared using an EVA raw material used in foam molding of general shoe soles.

The recycled pellet added foam compound forming step is a step in which the EVA recycled pellets are added to the EVA foam compound. Here, in the recycled pellet added foam compound forming step according to the embodiment of the present disclosure, 15 to 25 wt% of the EVA recycled pellets are added to 75 to 85 wt% of the EVA foam compound. When the amount of EVA recycled pellets added is too large, the dispersing power decreases when mixing materials, resulting in poor quality, and when the amount thereof is too small, recyclability decreases.

Meanwhile, the method according to the present disclosure may further include an additive adding step after the recycled pellet added foam compound forming step and before the EVA foam compound/recycled pellet primary mixing/dispersing step. In the additive adding step according to the embodiment of the present disclosure, 1 to 5 wt% of a compatibilizer, 1 to 3 wt% of a lubricant, and 5 to 10 wt% of calcium carbonate are added to a mixture of the EVA foam compound and the EVA recycled pellets. The adding of the additives leads to improved compatibility, improved dispersibility of recycled scraps, and uniform physical properties.

The EVA foam compound/recycled pellet primary mixing/dispersing step is a step in which the EVA foam compound and the EVA recycled pellets in a high viscosity state are primarily mixed and dispersed at a set rotation speed by a kneader 200 under a set processing temperature condition. Here, in the EVA foam compound/recycled pellet primary mixing/dispersing step according to the embodiment of the present disclosure, the EVA foam compound and the EVA recycled pellets are mixed and dispersed under a processing temperature condition of 85°C to 95°C. As mixing is performed at a high rotation speed of 60 to 75 rpm at a lower processing temperature of 85°C to 95°C compared to a conventional recycling process, a dispersion strengthening effect due to high shear force is obtained.

The EVA foam compound/recycled pellet secondary mixing/dispersing step is a step in which the primarily mixed and dispersed EVA foam compound and EVA recycled pellets are secondarily mixed and dispersed while inputting them into a roll mill 300. In the EVA foam compound/recycled pellet secondary mixing/dispersing step, the EVA foam compound and the EVA recycled pellets are mixed and dispersed under a processing temperature condition of 85°C to 95°C as in the EVA foam compound/recycled pellet primary mixing/dispersing step. As mixing is performed at a high rotation speed of 60 to 75 rpm at a lower processing temperature of 85°C to 95°C compared to a conventional recycling process, a dispersion strengthening effect due to high shear force is obtained. Through the EVA foam compound/recycled pellet primary mixing/dispersing step and the EVA foam compound/recycled pellet secondary mixing/dispersing step, the EVA recycled pellets are evenly dispersed in the EVA foam compound, creating a core-cell structure in which EVA foam compound particles homogeneously disperse and surround EVA recycled pellet particles. This enables uniform foaming during the plastic foam product manufacturing step, thereby realizing a good shape and improving the strength and quality of the product.

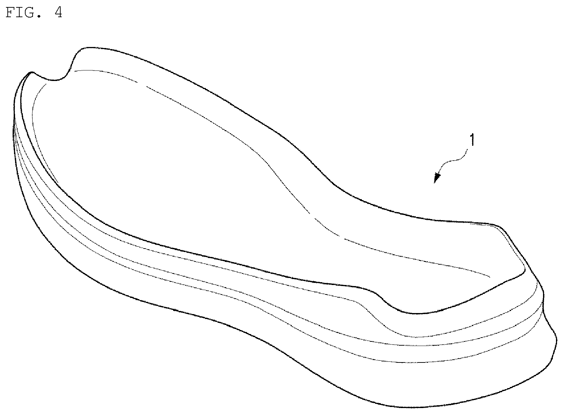

The plastic foam product manufacturing step is a step in which the mixed and dispersed EVA foam compound and EVA recycled pellets in a molten state are injected into a foam mold 40 to form a semi-finished plastic foam product, and then the semi-finished plastic foam product is input into a press mold 50 and press-molded to form a final plastic foam product such as a shoe sole 1 illustrated in FIG. 4.

According to the plastic foam product added with the EVA recycled pellets and the method of manufacturing the same according to the embodiments of the present disclosure configured as described above, there is provided a process for manufacturing a shoe sole by recycling shoe molding waste or used shoe waste through the EVA recycled pellet forming step, the EVA foam compound preparing step, the recycled pellet added foam compound forming step, the EVA foam compound/recycled pellet primary mixing/dispersing step, the EVA foam compound/recycled pellet secondary mixing/dispersing step, and the plastic foam product manufacturing step, thereby allowing shoe manufacturing to meet the trend of pursuing eco-friendly products in Korea and in markets such as Europe. In addition, according to the plastic foam product added with the EVA recycled pellets and the method of manufacturing the same according to the embodiments of the present disclosure, there is provided a process in which dispersion between materials is strengthened in the process of manufacturing the plastic foam product by adding the EVA recycled pellets to the EVA foam compound and mixing them with each other, thereby enabling uniform foaming and thus realizing a good shape and improving the strength and quality of the product.

Although the preferred embodiments of the plastic foam product added with the EVA recycled pellets and the method of manufacturing the same according to the present disclosure have been disclosed for illustrative purposes, those skilled in the art will appreciate that various modifications, additions, and substitutions are possible, without departing from the present disclosure as disclosed in the accompanying claims.

## Claims

1. A method of manufacturing a plastic foam product added with EVA recycled pellets, the method comprising:
forming EVA recycled pellets by crushing EVA foam waste by a crushing device (10);
preparing an EVA foam compound from an EVA raw material;
adding the EVA recycled pellets to the EVA foam compound;
primarily mixing and dispersing the EVA foam compound and the EVA recycled pellets in a high viscosity state at a set rotation speed by a kneader under a set processing temperature condition;
secondarily mixing and dispersing the primarily mixed and dispersed EVA foam compound and EVA recycled pellets while inputting the primarily mixed and dispersed EVA foam compound and EVA recycled pellets into a roll mill (300); and
forming a final plastic foam product by injecting the mixed and dispersed EVA foam compound and EVA recycled pellets in a molten state into a foam mold (40) to form a semi-finished plastic foam product and then inputting the semi-finished plastic foam product into a press mold (50) and press-molding the semi-finished plastic foam product,
**characterized in that**
the forming of the EVA recycled pellets is performed by forming EVA recycled pellets having a diameter of 3 to 6 mm by the crushing device (10),
the adding of the EVA recycled pellets to the EVA foam compound is performed by adding 15 to 25 wt% of the EVA recycled pellets to 75 to 85 wt% of the EVA foam compound, and
the primarily mixing and dispersing of the EVA foam compound and the EVA recycled pellets and the secondarily mixing and dispersing of the EVA foam compound and the EVA recycled pellets are performed by mixing and dispersing the EVA foam compound and the EVA recycled pellets under a processing temperature condition of 85°C to 95°C.

2. The method of claim 1, wherein the final plastic foam product is a shoe sole, and the EVA foam waste includes shoe molding waste generated in a shoe manufacturing process and used shoe waste discarded after use of finished shoe products.

3. The method of claim 2, further comprising:
after the forming of the final plastic foam product,
collecting a defective product while inspecting plastic foam products; and
inputting the collected defective product into the crushing device (10) by using the collected defective product as the EVA foam waste.

4. The method of claim 1, further comprising:
after the adding of the EVA recycled pellets to the EVA foam compound and before the primarily mixing and dispersing of the EVA foam compound and the EVA recycled pellets,
adding additives for improving compatibility, improving dispersibility of recycled scraps, and uniformizing physical properties to a mixture of the EVA foam compound and the EVA recycled pellets.

## Patentansprüche

1. Verfahren zur Herstellung eines mit EVA-Recyclingpellets versetzten Kunststoffschaumprodukts, wobei das Verfahren umfasst:
Bilden von EVA-Recyclingpellets durch Zerkleinern von EVA-Schaumstoffabfall mittels einer Zerkleinerungsvorrichtung (10);
Herstellen eines EVA-Schaumcompounds aus einem EVA-Rohmaterial;
Zugeben der EVA-Recyclingpellets zu dem EVA-Schaumcompound;
erstes Mischen und Dispergieren des EVA-Schaumcompounds und der EVA-Recyclingpellets in einem hochviskosen Zustand mit einer vorgegebenen Drehzahl mittels eines Kneters unter vorgegebenen Verarbeitungstemperaturbedingungen;
zweites Mischen und Dispergieren des zuerst gemischten und dispergierten EVA-Schaumcompounds und der EVA-Recyclingpellets, während das zuerst gemischte und dispergierte EVA-Schaumcompound und die EVA-Recyclingpellets einem Walzwerk (300) zugeführt werden; und
Bilden eines fertigen Kunststoffschaumprodukts, indem das gemischte und dispergierte EVA-Schaumcompound und die EVA-Recyclingpellets in geschmolzenem Zustand in ein Schaumformwerkzeug (40) eingespritzt werden, um ein halbfertiges Kunststoffschaumprodukt zu bilden, und anschließend das halbfertige Kunststoffschaumprodukt in ein Pressformwerkzeug (50) eingebracht und pressgeformt wird,
**dadurch gekennzeichnet, dass**
das Bilden der EVA-Recyclingpellets dadurch erfolgt, dass mittels der Zerkleinerungsvorrichtung (10) EVA-Recyclingpellets mit einem Durchmesser von 3 bis 6 mm gebildet werden,
das Zugeben der EVA-Recyclingpellets zu dem EVA-Schaumcompound dadurch erfolgt, dass 15 bis 25 Gew.-% der EVA-Recyclingpellets zu 75 bis 85 Gew.-% des EVA-Schaumcompounds gegeben werden, und
das erste Mischen und Dispergieren des EVA-Schaumcompounds und der EVA-Recyclingpellets sowie das zweite Mischen und Dispergieren des EVA-Schaumcompounds und der EVA-Recyclingpellets dadurch durchgeführt werden, dass das EVA-Schaumcompound und die EVA-Recyclingpellets unter Verarbeitungstemperaturbedingungen von 85 °C bis 95 °C gemischt und dispergiert werden.

2. Verfahren nach Anspruch 1, wobei das fertige Kunststoffschaumprodukt eine Schuhsohle ist und der EVA-Schaumstoffabfall Formabfälle aus der Schuhherstellung sowie Abfälle aus nach Gebrauch entsorgten Schuhen umfasst.

3. Verfahren nach Anspruch 2, ferner umfassend:
nach dem Bilden des fertigen Kunststoffschaumprodukts
Sammeln eines fehlerhaften Produkts während einer Prüfung von Kunststoffschaumprodukten; und
Einbringen des gesammelten fehlerhaften Produkts in die Zerkleinerungsvorrichtung (10), wobei das gesammelte fehlerhafte Produkt als EVA-Schaumstoffabfall verwendet wird.

4. Verfahren nach Anspruch 1, ferner umfassend:
nach dem Zugeben der EVA-Recyclingpellets zu dem EVA-Schaumcompound und vor dem ersten Mischen und Dispergieren des EVA-Schaumcompounds und der EVA-Recyclingpellets
Zugeben von Additiven zur Verbesserung der Verträglichkeit, zur Verbesserung der Dispergierbarkeit von recyceltem Ausschussmaterial und zur Vereinheitlichung der physikalischen Eigenschaften zu einem Gemisch aus dem EVA-Schaumcompound und den EVA-Recyclingpellets.

## Revendications

1. Procédé de fabrication d'un produit en mousse plastique auquel sont ajoutés des granulés recyclés d'EVA, le procédé comprenant:
la formation de granulés recyclés d'EVA par broyage de déchets de mousse d'EVA au moyen d'un dispositif de broyage (10);
la préparation d'un composé moussant d'EVA à partir d'une matière première d'EVA;
l'ajout des granulés recyclés d'EVA au composé moussant d'EVA;
un premier mélange et une première dispersion du composé moussant d'EVA et des granulés recyclés d'EVA, à l'état hautement visqueux, au moyen d'un malaxeur fonctionnant à une vitesse de rotation prédéterminée, dans des conditions de température de traitement prédéterminées;
un second mélange et une seconde dispersion du composé moussant d'EVA et des granulés recyclés d'EVA ayant subi le premier mélange et la première dispersion, lors de leur introduction dans un laminoir (300); et
la formation d'un produit final en mousse plastique en injectant, à l'état fondu, le composé moussant d'EVA et les granulés recyclés d'EVA mélangés et dispersés dans un moule de moussage (40) afin de former un produit semi-fini en mousse plastique, puis en introduisant le produit semi-fini en mousse plastique dans un moule de pressage (50) et en le moulant sous presse,
**caractérisé en ce que**
la formation des granulés recyclés d'EVA est réalisée, au moyen du dispositif de broyage (10), de manière à obtenir des granulés recyclés d'EVA ayant un diamètre de 3 à 6 mm,
l'ajout des granulés recyclés d'EVA au composé moussant d'EVA est réalisé en ajoutant 15 à 25 % en poids des granulés recyclés d'EVA à 75 à 85 % en poids du composé moussant d'EVA, et
le premier mélange et la première dispersion du composé moussant d'EVA et des granulés recyclés d'EVA ainsi que le second mélange et la seconde dispersion du composé moussant d'EVA et des granulés recyclés d'EVA sont réalisés en mélangeant et en dispersant le composé moussant d'EVA et les granulés recyclés d'EVA dans des conditions de température de traitement de 85 °C à 95 °C.

2. Procédé selon la revendication 1, dans lequel le produit final en mousse plastique est une semelle de chaussure, et les déchets de mousse d'EVA comprennent des déchets de moulage issus de la fabrication de chaussures ainsi que des déchets de chaussures usagées mises au rebut après utilisation.

3. Procédé selon la revendication 2, comprenant en outre:
après la formation du produit final en mousse plastique,
la collecte d'un produit défectueux lors de l'inspection de produits en mousse plastique; et
l'introduction du produit défectueux collecté dans le dispositif de broyage (10), le produit défectueux collecté étant utilisé comme déchet de mousse d'EVA.

4. Procédé selon la revendication 1, comprenant en outre:
après l'ajout des granulés recyclés d'EVA au composé moussant d'EVA et avant le premier mélange et la première dispersion du composé moussant d'EVA et des granulés recyclés d'EVA,
l'ajout, à un mélange du composé moussant d'EVA et des granulés recyclés d'EVA, d'additifs destinés à améliorer la compatibilité et la dispersibilité des rebuts recyclés ainsi qu'à uniformiser les propriétés physiques.
